# EUROPÄISCHE PATENTANMELDUNG

(11) **EP 2 056 012 A1**
(43) Veröffentlichungstag der Anmeldung: **06.05.2009**
(21) Anmeldenummer: 08014943.8
(22) Anmeldetag: 23.08.2008
(51) Int. Cl.: F16N 29/00, F16N 13/04, F04B 51/00, F16N 25/02

(54) **Pumpenelement**

(30) Priorität: 30.10.2007 DE 202007015060 U
(71) Anmelder: Lincoln GmbH, 69190 Walldorf (DE)
(72) Erfinder: Paluncic, Zdravko, Dr.-Ing., 67067 Ludwigshafen (DE)
(74) Vertreter: KEIL & SCHAAFHAUSEN Patentanwälte

(57) **Zusammenfassung**

Die Erfindung betrifft ein Pumpenelement (1) mit einem Pumpenkörper (2), in welchem in einer Bohrung (3) eine z.B. hülsenartige Regulierspindel (4) aufgenommen ist, welche an ihrem einen Ende (6) mit einem Anzeigeelement (18) verschlossen ist und einen Kolbenraum (7) einschließt. In diesem ist ein Kolben (8; 9) verschiebbar geführt, welcher mit wenigstens einem in dem Anzeigeelement (18) aufgenommenen Magnetelement (17) gekoppelt ist, welches ein in dem Anzeigeelement (18) bewegliches Kontrollelement (20) auslenkt.

## Beschreibung

Die Erfindung betrifft ein Pumpenelement mit einem in einem Kolbenraum verschiebbar geführten Kolben sowie einer Kontrolle der Pumpbewegung des Kolbens.

Derartige Pumpenelemente werden beispielsweise an einem Schmierstoffverteiler zur Förderung und Verteilung von Schmierstoff verwendet. Bei der Verwendung an einem Schmierstoffverteiler ist eine zuverlässige Funktion essentiell. Insbesondere muss ein Ausfall rechtzeitig bemerkt werden. Ansonsten besteht die Gefahr, dass bei einer unterbliebenen Schmierung ein Schaden an der zu schmierenden Vorrichtung auftritt. Aus der DE 43 28 415 C1 ist ein Schmierstoffverteiler bekannt, bei dem in einer beidseitig verschlossenen Kolbenbohrung eines Verteilerblocks ein mit einem Hubmagnet gekoppelter Förderkolben geführt ist. Dabei ist eine in die Kolbenbohrung an einem Ende eingeschraubte Regulierhülse vorgesehen, welche an ihrem der Verschraubung gegenüberliegenden Ende eine Justiereinrichtung zur Hubbegrenzung aufweist.

Aufgabe der vorliegenden Erfindung ist es, ein hinsichtlich einer Funktionskontrolle verbessertes Pumpenelement bereitzustellen, mit welchem auch die Montage und insbesondere eine Einstellbarkeit eines Kolbenhubes vereinfacht wird.

Diese Aufgabe wird erfindungsgemäß im Wesentlichen z. B. durch ein Pumpenelement mit den Merkmalen des Anspruches 1 gelöst. Vorteilhafte Ausgestaltungen und Weiterbildungen sind in den jeweiligen abhängigen Ansprüchen angegeben.

Bei einem erfindungsgemäßen Pumpenelement mit einem Pumpenkörper ist in einer Bohrung des Letzteren eine z. B. hülsenartige Regulierspindel aufgenommen, welche an ihrem einen Ende mit einem Anzeigeelement verschlossen ist und einen Kolbenraum einschließt, in welchem ein Kolben verschiebbar geführt ist, welcher mit wenigstens einem in dem Anzeigeelement aufgenommenen Magnetelement gekoppelt ist, welches ein in dem Anzeigeelement bewegliches Kontrollelement auslenkt.

Hierdurch ist eine vorteilhafte Sichtkontrolle der Pumpenfunktion gewährleistet. Vorzugsweise ermöglicht die Erfindung auch einen vereinfachten Zusammenbau, wobei insbesondere auf ein ansonsten an dem Anzeigeelement vorgesehenes Regulierelement verzichtet werden kann. Weiterhin ermöglicht dies vorzugsweise, die Regulierung und Dichtung des Kolbenraumes zumindest weitestgehend voneinander zu trennen, um die Zuverlässigkeit der Dichtung zu gewährleisten.

Bei der Pumpe kann es sich um eine Pneumatik-, Hydraulikpumpe oder dgl. handeln. Der Pumpenkörper hat beispielsweise eine Zylinderform. Insbesondere kann der Pumpenkörper wenigstens eine mit dem Kolbenraum kommunizierende Fluidleitung aufweisen.

Als Magnetelement ist vorzugsweise ein hartmagnetisches Element vorgesehen. Damit kann das beispielsweise ebenfalls magnetische Kontrollelement ausgelenkt werden. Es kann jedoch auch vorgesehen sein, als Magnetelement ein weichmagnetisches Material, insbesondere Mu-Metall, zu verwenden, so dass ein Magnetfeld eines weiteren Magneten damit abgeschirmt werden kann.

Eine Auslenkung des Kontrollelementes erfolgt zumindest in einem Teilbereich eines Verschiebungsbereiches des Kolbens. Beispielsweise kann eine Auslenkung lediglich oberhalb einer vorgegebenen Auslenkung bzw. Verschiebung des Kolbens vorgesehen sein.

Eine besonders zuverlässige Kontrolle einer Pumpbewegung des Kolbens kann ermöglicht werden, wenn eine Verschiebung des Kontrollelementes mit einer Verschiebung des Kolbens synchron ist. Vorteilhafterweise ermöglicht dies nicht nur eine Kontrolle der Pumpbewegung an sich, sondern auch eine zumindest visuelle Begutachtung von Beschleunigung und/oder Verfahrweg des Kolbens.

Das Kontrollelement kann beispielsweise um eine Achse schwenkbar auslenkbar sein. Beispielsweise weist das Kontrollelement wenigstens einen magnetischen Pol auf, welcher von einem entgegen gesetzten magnetischen Pol des Magnetelementes angezogen wird und bei einer Bewegung des Magnetelementes demzufolge eine Bewegung bzw. Verschwenkung des Kontrollelementes bewirkt.

Eine einfache Bauweise eines Kontrollelementes wird vorzugsweise erreicht, wenn das Kontrollelement in der axialen Bewegungsrichtung des Kolbens verschiebbar ist. Insbesondere ermöglicht dies eine genaue Abbildung der Kolbenbewegung mit dem Kontrollelement.

Für eine möglichst einfache Halterung des Magnetelementes kann das Anzeigeelement gemäß einer Weiterbildung des Pumpenelementes eine das Magnetelement umschließende Führungsbuchse aufweisen und das Kontrollelement die Führungsbuchse zumindest teilweise, insbesondere koaxial, umschließen. Das Magnetelement kann dabei beispielsweise als stabförmiger Magnet ausgestaltet sein. Das Anzeigeelement ist insbesondere aus einem unmagnetischen Material gefertigt, um das Magnetfeld des Magnetelements nicht zu beeinträchtigen. Das Kontrollelement und/oder das Anzeigeelement sind beispielsweise als Ring bzw. Zylinderrohrabschnitt ausgestaltet. Vorzugsweise weist das Kontrollelement dabei einen kreisförmigen Querschnitt auf. Es versteht sich jedoch von selbst, dass an Stelle eines streng kreisförmigen Querschnittes beispielsweise auch ein quadratischer, ein dreieckiger, ein polygonaler oder ein unregelmäßiger Querschnitt vorgesehen sein kann. Weiterhin kann sich das Kontrollelement auch nur über lediglich einen Teilumfang der Führungsbuchse erstrecken.

Für eine Halterung des Magnetelementes ist gemäß einer Ausgestaltung des Pumpenelementes vorgesehen, dass das Magnetelement an einem Anzeigestift angebracht ist. Dieser ist dabei beispielsweise mit dem Kolben verbunden. Vorteilhafterweise ermöglicht der Anzeigestift eine direkte mechanische Kopplung zwischen Magnetelement und Kontrollelement. Der Anzeigestift ist insbesondere koaxial zur Regulierspindel ausgerichtet.

Gemäß einer Weiterbildung des Pumpenelementes ist der an dem Pumpenkolben angebrachte Anzeigestift durch eine Durchführung des Anzeigeelementes hindurch in das Anzeigeelement geführt. Insbesondere ermöglicht die Durchführung eine zumindest weitestgehende Abdichtung zwischen einem Inneren des Anzeigeelementes und einem Inneren der Regulierspindel. Eine Abdichtung ist jedoch nicht zwingend erforderlich. Insbesondere kann Schmierstoff, welcher aus einem Inneren der Regulierspindel in ein Inneres des Anzeigeelementes übertritt, dazu genutzt werden, die als Lager für den Anzeigestift dienende Durchführung zu schmieren. Insbesondere kann das Innere des Anzeigeelementes mit dem vom Pumpenelement geförderten Fluid, insbesondere mit Schmierstoff, gefüllt sein, wobei das Kontrollelement darin bewegt wird. Um einen Bewegungswiderstand des Kontrollelementes möglichst zu minimieren, ist zumindest eine Durchtrittsöffnung in dem Kontrollelement und/oder zwischen Kontrollelement und Anzeigeelement vorgesehen, durch die das zu pumpende Fluid bei einer Bewegung des Kontrollelementes, insbesondere einer Verschiebung, hindurch treten kann.

In einer weiteren Ausgestaltung des Pumpenelementes ist das Anzeigeelement an einem der Regulierspindel abgewandten Ende mit einem Blindstopfen verschlossen. Vorzugsweise ermöglicht dies eine einfache Herstellung des Anzeigeelementes, insbesondere als Hülse, welches zum Verschließen an dem der Regulierspindel abgewandten Ende mit dem Blindstopfen beispielsweise ein Gewinde aufweist. An Stelle einer Verschraubung kann in einer anderen Ausgestaltung auch eine Verrastung oder dgl. vorgesehen sein.

Eine einfache Möglichkeit zur Aufnahme der Regulierspindel in der Bohrung des Pumpenkörpers wird vorzugsweise erreicht, wenn die Regulierspindel über wenigstens einen Gewindeabschnitt mit dem Pumpenkolben verschraubt ist. Insbesondere handelt es sich dabei um eine wiederholbar lösbare Verschraubung. Die Verschraubung ermöglicht vorteilhafterweise sowohl eine Dichtung der Regulierspindel gegenüber dem Pumpenkörper als auch eine Anpassung einer Einbautiefe der Regulierspindel in dem Pumpenkörper.

Gemäß einer Weiterbildung des Pumpenelementes ist mittels der Regulierspindel ein Verschiebungshub des Kolbens einstellbar. Beispielsweise kann in Abhängigkeit einer Einbautiefe des Anzeigeelementes in der Bohrung des Pumpenkörpers der Kolbenraum vergrößert oder verkleinert werden. Alternativ oder zusätzlich kann eine Verschiebungsbewegung des Kolbens beispielsweise mittels eines Anschlages in dem Anzeigeelement je nach Einbautiefe des Anzeigeelementes in der Bohrung des Pumpenkörpers verschieden begrenzt werden. Insbesondere wird der Verschiebungshub mit zunehmendem Einschrauben bzw. Einstecken des Anzeigeelementes in die Bohrung des Pumpenkörpers verringert.

Eine Kontrolle der Einstellung des Verschiebungshubes kann vorteilhafterweise erleichtert werden, wenn das Anzeigeelement und/oder die Regulierspindel und/oder der Pumpenkörper wenigstens einen Anschlag zur Begrenzung einer Einbautiefe der Regulierspindel in den Pumpenkörper aufweisen. Beispielsweise kann die Regulierspindel eine kragenförmige Aufweitung aufweisen, welche bei einem Einschrauben an dem Pumpenkörper anschlagen kann. Alternativ kann eine derartige Auskragung auch an dem Anzeigeelement vorgesehen sein, so dass diese Auskragung bei einem Einschrauben der Regulierspindel in den Pumpenkörper bei Erreichen einer maximalen Einschraubtiefe an dem Pumpenkörper anschlägt. Alternativ oder zusätzlich kann im Inneren der Bohrung ein Absatz vorgesehen sein, an welchem die Regulierspindel bei Erreichen einer maximalen Einschraubtiefe anschlägt.

Die Gefahr einer Beschmutzung und/oder Beschädigung des Anzeigeelementes kann vorteilhafterweise verringert werden, wenn das Anzeigeelement eine Schutzhülse aufweist, welche das Kontrollelement und insbesondere die Anzeigebuchse insbesondere koaxial umschließt. Die Schutzhülse ist dabei beispielsweise mittels einer Schraub-, Rast-, Klemm- oder Steckverbindung an dem Anzeigeelement und/oder der Regulierspindel befestigt. Gleichermaßen kann auch eine Befestigung am Pumpenkörper vorgesehen sein. Für eine Kontrolle kann die Schutzhülse insbesondere abgenommen werden.

Eine Kontrolle der Pumpbewegung kann vereinfacht werden, wenn gemäß einer Ausgestaltung der Schutzhülse die Schutzhülse wenigstens einen durchsichtigen Materialabschnitt oder wenigstens ein Schauloch aufweist. Beispielsweise ist die Schutzhülse vollständig aus einem transparenten bzw. durchsichtigen Material gefertigt. In einer anderen Ausgestaltung kann jedoch auch lediglich ein Fenster in einer ansonsten undurchsichtigen Schutzhülse vorgesehen sein.

Zusätzlich zu einer visuellen Kontrolle einer Pumpbewegung des Kolbens kann auch ein akustisches Signal benutzt werden, welches entsteht, wenn das Kontrollelement in wenigstens einer der Auslenkungsendlagen an einer Begrenzung anschlägt. Eine derartige Begrenzung wird beispielsweise durch einen Absatz an einem Umfang der Regulierspindel oder einem inneren Umfang der Schutzhülse vorgesehen.

Sofern eine derartige akustische Kontrolle nicht gewünscht ist, kann in wenigstens einer Auslenkungsendlage des Kontrollelementes wenigstens ein Dämpfungselement, insbesondere ein O-Ring, vorgesehen sein. Insbesondere kann der wenigstens eine O-Ring gleichzeitig dazu dienen, eine Klemmkraft auf die auf das Anzeigeelement aufgeschobene Schutzhülse auszuüben.

Im Folgenden wird die Erfindung anhand der Zeichnung beispielhaft erläutert. Die Erfindung ist jedoch nicht auf die dort dargestellten Merkmalskombinationen beschränkt. Vielmehr können in der Beschreibung und/oder den Figuren dargestellte Merkmale unabhängig von ihrer Rückbeziehung in den Schutzansprüchen für sich alleine oder in Kombination erfindungswesentlich sein.

Es zeigen:
- Fig. 1: ein Pumpenelement mit einer optischen Anzeige, und
- Fig. 2: eine Fördermenge in Abhängigkeit von einer Einbautiefe einer Regu- lierspindel.

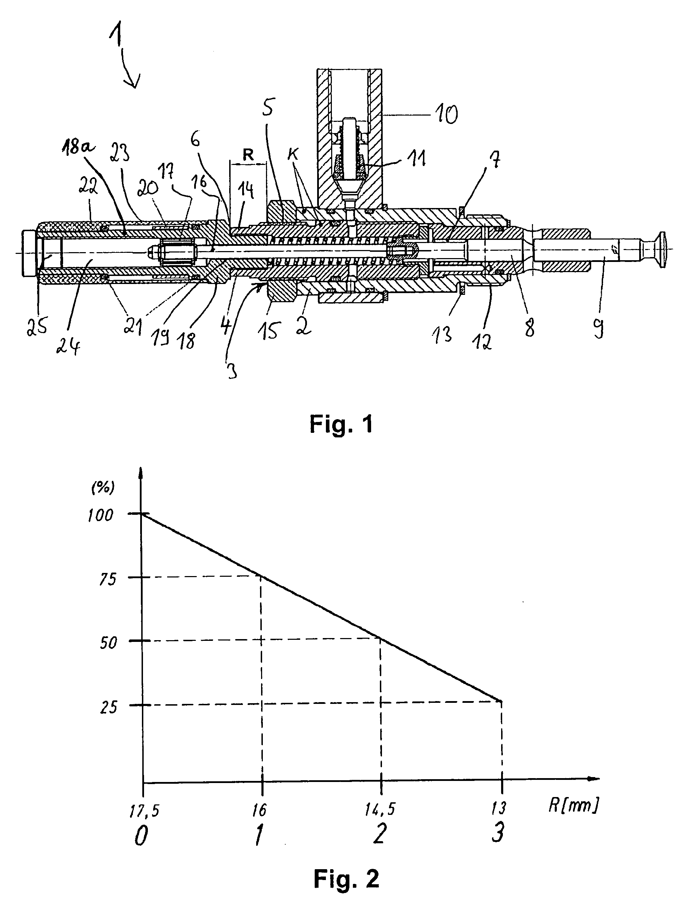

Bei dem in Fig. 1 gezeigten Pumpenelement 1 handelt es sich um ein Pumpenelement einer Schmierstoffpumpe. Diese weist einen Pumpenkörper 2 auf, welcher mit einer Bohrung 3 versehen ist. In diese Bohrung 3 ist eine Regulierspindel 4 eingeschraubt, und zwar mittels eines Gewindeabschnittes 5. Dieser Gewindeabschnitt 5 ermöglicht es, die Regulierspindel 4 unterschiedlich tief in den Pumpenkörper 2 einzuschrauben, so dass ein Abstand R zwischen dem Pumpenkörper 2 und einem Ende 6 der Regulierspindel 4 variieren kann. Auf diese Weise kann ein Kolbenraum 7 in seiner Größe beeinflusst werden. Somit kann ein darin geführter Kolben 8, bei welchem es sich um einen Steuerkolben handelt, bzw. ein Förderkolben 9 je nach gewählter Einbautiefe der Regulierspindel 4 in dem Pumpenkörper 2 eine größere oder eine kleinere Fördermenge in einem Pumpvorgang pumpen. Die geförderte Menge des Schmierstoffes wird dann über einen Auslassstutzen 10, welcher mit einem Rückschlagventil 11 versehen ist, abgeführt. Das Pumpenelement 1 ist zur Bildung der Schmiermittelpumpe darüber hinaus mit einem weiteren, nicht dargestellten Bauelement, verbunden, wobei zur Verbindung ein entsprechender Anschluss 12 sowie eine zugehörige Dichtung 13 vorgesehen sind.

Zur Einstellung des Abstandes R weist die Regulierspindel 4 einen mutterförmigen Abschnitt 14 auf, so dass unter Einsatz von Schraubenschlüsseln mit Hilfe der am Pumpenkörper 2 vorgesehenen Gegenmutter 15 eine Verdrehung von Regulierspindel 4 und Pumpenkörper 2 zueinander erfolgen kann.

Zur Anzeige einer Bewegung des Kolbens 8 bzw. des Förderkolbens 9 sind diese Kolben über einen Anzeigestift 16 mit einem Magnetelement 17 verbunden. Das Magnetelement 17 ist dabei z. B. buchsenförmig ausgestaltet. Das Magnetelement 17 ist dabei verschiebbar in einer Führungsbuchse 18a eines Anzeigeelements 18 geführt, welches die Regulierspindel 4 an ihrem einen Ende 6 in einer Schraubverbindung verschließt.

Der Anzeigestift 16 ist durch eine Durchführung 19 des Anzeigeelementes 18 hindurch in das Anzeigeelement 18 geführt. Bei einer Auslenkung der Kolben 8, 9 bewegt sich das Magnetelement 17 synchron mit diesem. Um diese Bewegung optisch darzustellen, ist ein Kontrollelement 20 vorgesehen, welches als Zylinderhülse koaxial auf der Führungsbuchse 18a des Anzeigeelements 18 geführt ist. Das Kontrollelement 20 kann als Magnet ausgestaltet sein, so dass bei einer Bewegung des Magnetelementes 17 eine gleichsinnige und synchrone Verschiebung des Kontrollelementes 20 erfolgt. Zur Dämpfung eines Anschlages des Kontrollelementes 20 sind in Endlagen jeweils ein O-Ring 21 vorgesehen. Diese O-Ringe 21 dienen gleichzeitig dazu, eine reibschlüssige Verbindung zwischen einer Schutzhülse 22, welche auf das Anzeigeelement 18 aufgesteckt ist, und dem Anzeigeelement 18 herzustellen. Für eine visuelle Kontrolle weist die Schützhülse 22 ein Sichtfenster 23 auf.

Ein Innenraum 24 des Anzeigelementes 18 kann mit einem nicht dargestellten zu fördernden Fluid gefüllt sein. Dies ist möglich, weil der Innenraum 24 mittels eines Blindstopfens 25 zuverlässig verschlossen ist. Insofern kann in dem Innenraum 24 auch der gleiche Druck wie in dem Kolbenraum 7 herrschen.

Wie sich ein veränderter Abstand R auf eine Fördermenge auswirkt ist in Fig. 2 dargestellt. Dort ist auf der Abszisse der Abstand R in Millimetern bzw. darunter die Anzahl der Umdrehungen der Regulierspindel aufgetragen. Auf der Ordinate ist eine Fördermenge in Prozent angegeben, wobei der 100%-Wert auf die Stellung bei null Umdrehungen normiert ist. Durch eine Verringerung des Abstandes R kann somit die zu fördernde Menge an Schmierstoff in weiten Bereichen eingestellt werden. In diesem Fall kann die Fördermenge zwischen 25 und 100% bei einer Verdrehung der Regulierspindel um bis zu drei Umdrehungen eingestellt werden.

### Bezugszeichenliste:

- 1: Pumpenelement
- 2: Pumpenkörper
- 3: Bohrung
- 4: Regulierspindel
- 5: Gewindeabschnitt
- 6: Ende der Regulierspindel
- 7: Kolbenraum
- 8: Kolben/Steuerkolben
- 9: Förderkolben
- 10: Auslassstutzen
- 12: Anschluss
- 13: Dichtung
- 14: mutternförmiger Abschnitt
- 15: Gegenmutter
- 16: Anzeigestift
- 17: Magnetelement
- 18: Anzeigeelement
- 18a: Führungsbuchse
- 19: Durchführung
- 20: Kontrollelement
- 21: O-Ring
- 22: Schutzhülse
- 23: Sichtfenster
- 24: Innenraum
- 25: Blindstopfen
- R: Abstand

## Patentansprüche

1. Pumpenelement (1) mit einem Pumpenkörper (2), in welchem in einer Bohrung (3) eine z. B. hülsenartige Regulierspindel (4) aufgenommen ist, welche an ihrem einen Ende (6) mit einem Anzeigeelement (18) verschlossen ist und einen Kolbenraum (7) einschließt, in welchem ein Kolben (8; 9) verschiebbar geführt ist, welcher mit wenigstens einem in dem Anzeigeelement (18) aufgenommenen Magnetelement (17) gekoppelt ist, welches ein in dem Anzeigeelement (18) bewegliches Kontrollelement (20) auslenkt.

2. Pumpenelement (1) nach Anspruch 1, **dadurch gekennzeichnet, dass** eine Auslenkung, insbesondere eine Verschiebung, des Kontrollelements (20) mit einer Verschiebung des Kolbens (8; 9) synchron ist.

3. Pumpenelement (1) nach einem der vorhergehenden Ansprüche, **dadurch gekennzeichnet, dass** das Kontrollelement (20) in der axialen Bewegungsrichtung des Kolbens (8; 9) verschiebbar ist.

4. Pumpenelement (1) nach einem der vorhergehenden Ansprüche, **dadurch gekennzeichnet, dass** das Anzeigeelement (18) eine das Magnetelement (17) umschließende Führungsbuchse (18a) aufweist und das Kontrollelement (20) die Führungsbuchse (18a) zumindest teilweise, insbesondere koaxial umschließt.

5. Pumpenelement (1) nach einem der vorhergehenden Ansprüche, **dadurch gekennzeichnet, dass** das Magnetelement (17) an einem z.B. mit dem Kolben (8, 9) gekoppelten Anzeigestift (16) angebracht ist.

6. Pumpenelement (1) nach Anspruch 5, **dadurch gekennzeichnet, dass** der an dem Pumpenkolben (8; 9) angebrachte Anzeigestift (16) durch eine Durchführung des Anzeigeelements (18) hindurch in das Anzeigeelement (18) geführt ist.

7. Pumpenelement (1) nach einem der vorhergehenden Ansprüche, **dadurch gekennzeichnet, dass** das Anzeigeelement (18) an einem der Regulierspindel (4) abgewandten Ende mit einem Blindstopfen (25) verschlossen ist.

8. Pumpenelement (1) nach einem der vorhergehenden Ansprüche, **dadurch gekennzeichnet, dass** die Regulierspindel (4) über wenigstens einen Gewindeabschnitt (5) mit dem Pumpenkörper (2) verschraubt ist.

9. Pumpenelement (1) nach einem der vorhergehenden Ansprüche, **dadurch gekennzeichnet, dass** mittels der Regulierspindel (4) ein Verschiebungshub des Kolbens (8; 9) einstellbar ist.

10. Pumpenelement (1) nach einem der vorhergehenden Ansprüche, **dadurch gekennzeichnet, dass** das Anzeigeelement (18) oder/und die Regulierspindel (4) oder/und der Pumpenkörper (2) wenigstens einen Anschlag zur Begrenzung einer Einbautiefe der Regulierspindel (4) in dem Pumpenkörper (2) aufweist/aufweisen.

11. Pumpenelement (1) nach einem der vorhergehenden Ansprüche, **dadurch gekennzeichnet, dass** das Anzeigeelement (18) eine Schutzhülse (22) aufweist, welche das Kontrollelement (20) und insbesondere die Führungsbuchse (18a) insbesondere koaxial umschließt.

12. Pumpenelement (1) nach Anspruch 11, **dadurch gekennzeichnet, dass** die Schutzhülse (22) wenigstens einen durchsichtigen Materialabschnitt oder wenigstens ein Schauloch aufweist.

13. Pumpenelement (1) nach einem der vorhergehenden Ansprüche, **dadurch gekennzeichnet, dass** in wenigstens einer Auslenkungsendlage des Kontrollelements (20) wenigstens ein Dämpfungselement, insbesondere ein O-Ring (21), vorgesehen ist.
